# EUROPEAN PATENT APPLICATION

(11) **EP 2 365 425 A1**
(43) Date of publication of application: **14.09.2011**
(21) Application number: 09831645.8
(22) Date of filing: 02.12.2009
(51) Int. Cl.: G06F 3/041

(54) **MANUAL CONTROL ACTION INPUT DEVICE AND COMPUTER PROGRAM**

(30) Priority: 08.12.2008 JP 2008312590
(71) Applicant: Sharp Kabushiki Kaisha, Osaka-shi, Osaka 545-8522 (JP)
(72) Inventor: HINODE, Haruo, Osaka-shi Osaka 545-8522 (JP)
(74) Representative: Müller - Hoffmann & Partner
(86) International application number: PCT/JP2009/006525
(87) International publication number: WO 2010/067537

(57) **Abstract**

When light intensity of ambient light passing through a touch panel section 11 is smaller than a prescribed value, an operation accepting device 1 recognizes a palm as a contact part of a hand of an operator contacted with the touch panel section 11 in a dome shape, and when the light intensity exceeds the prescribed value, the operation accepting device 1 recognizes a fingertip as the contact part. When a palm is recognized, the operation accepting device 1 accepts a circular palm sliding operation in the touch panel section 11 correspondingly to an image selection operation of a television set 2, or a linear palm sliding operation correspondingly to a channel changing operation of the television set 2. When a fingertip is recognized, the operation accepting device 1 accepts a circular fingertip sliding operation or a linear fingertip sliding operation in the touch panel section 11 correspondingly to an operation of the television set 2 for controlling a reproducing operation of a recording/reproducing device 5.

## Description

### Technical Field

The present invention relates to an operation accepting device and a computer program for specifying a part of a hand of an operator contacted with a touch panel and for accepting an operation in accordance with the specified part.

### Background Art

Recently, an operation accepting device using a touch panel is widely employed in terminal units such as a ticket-vending machine installed in a station and an ATM (Automated Teller Machine) installed in a bank, remote controllers for controlling remotely video-related articles, and electronic equipment such as cellular phones. Such an operation accepting device accepts a plurality of operations on the basis of physical contacts detected by the touch panel. An operation accepting device described in Patent Document 1, for example, is equipped with a touch panel having a resistive film divided into strips, so as to be able to accept different operations in accordance with various cases, for example, where a small contact area with a tip of a pen, a tip of a nail or the like is detected and where a large contact area with the inner surface of a finger or the like is detected. An operation accepting device described in Patent Document 2 is capable of accepting different operations of a drag operation and a click operation in accordance with a case where a pushing pressure detected by a touch panel is smaller than or not smaller than a prescribed threshold value. An operation accepting device described in Patent Document 3 is capable of accepting a plurality of different operations by changing a distance or the like between two fingertips in contact with a touch panel.

The touch panel used in such a conventional operation accepting device has a flat panel face. On the contrary, an operation accepting device may be provided with a touch panel having a curved panel face, so that not only operations performed through contacts with a fingertip, a tip of a pen and the inner surface of a finger but also an operation performed through a contact with a palm may be accepted, and thus, the operation accepting device is capable of accepting a plurality of kinds of operations. Patent Document 4 describes an operation accepting device equipped with a capacitive touch panel having a curved panel face in a dome shape, a cone shape or an arch shape, so as to be operated by an operator by the feel of the touch panel without visually confirming the panel face.
Patent Document 1: Japanese Patent Application Laid-Open No. 2004-213312
Patent Document 2: Japanese Patent Application Laid-Open No. 2005-196810
Patent Document 3: Japanese Patent Application Laid-Open No. 2008-508601
Patent Document 4: International Publication No. W02007/099733 pamphlet

### Disclosure of the Invention

### Problem to be Solved by the Invention

The operation accepting device described in Patent Document 4, however, accepts an operation regardless of a part of a hand of an operator in contact with the touch panel, and hence, there is a problem that a plurality of operations in accordance with parts of a hand of an operator, such as an operation with a palm and an operation with a fingertip, cannot be respectively accepted.

The present invention was devised in consideration of the aforementioned circumstances, and an object of the present invention is providing an operation accepting device and a computer program capable of accepting a plurality of kinds of operations respectively corresponding to a plurality of parts of a hand of an operator by providing part specifying means for specifying a contact part of a hand of an operator contacted with a touch panel out of a plurality of parts of the hand and operation specifying means for specifying an operation to be accepted on the basis of the specified part.

### Means for Solving the Problem

The operation accepting device according to the present invention is an operation accepting device, including a touch panel for detecting a contact position, for accepting a plurality of operations on the basis of the contact position detected by the touch panel, characterized by further including part specifying means for specifying a contact part of a hand of an operator contacted with the touch panel out of a plurality of parts of the hand on the basis of the contact position detected by the touch panel; operation specifying means for specifying at least one operation out of the plurality of operations on the basis of the contact part specified by the part specifying means; and operation accepting means for accepting the operation specified by the operation specifying means on the basis of the contact position detected by the touch panel.

According to the present invention, an operation corresponding to a contact part of a hand of an operator contacted with the touch panel is accepted.

In the operation accepting device according to the present invention, the touch panel is capable of detecting a plurality of contact positions, and the part specifying means specifies the contact part on the basis of the number of contact positions detected by the touch panel.

According to the present invention, when the number of contact positions detected by the touch panel is plural, a palm or the like with a large contact area is specified as the contact part of the hand of the operator contacted with the touch panel, and when the number of contact positions detected by the touch panel is one, a finger or the like with a small contact area is specified.

The operation accepting device according to the present invention is an operation accepting device, including a touch panel for detecting a contact position, for accepting a plurality of operations on the basis of the contact position detected by the touch panel, characterized by further includes light intensity detecting means provided on a rear surface of the touch panel for detecting light intensity of light passing through the touch panel; part specifying means for specifying a contact part of a hand of an operator contacted with the touch panel out of a plurality of parts of the hand on the basis of the light intensity detected by the light intensity detecting means; operation specifying means for specifying at least one operation out of the plurality of operations on the basis of the contact part specified by the part specifying means; and operation accepting means for accepting the operation specified by the operation specifying means on the basis of the contact position detected by the touch panel.

According to the present invention, when the light intensity of the light passing through the touch panel is low, a palm or the like of an operator in contact with a panel face with a large contact area and blocking the ambient light entering the touch panel face in a large area is specified. When the light intensity of the light passing through the touch panel is high, a finger or the like contacted with the panel face with a small contact area and blocking the ambient light in a small area is specified.

In the operation accepting device according to the present invention, the touch panel is in a dome shape.

According to the present invention, an operation performed with a palm of the operator contacted with the touch panel in such a manner as to wrap the dome shape is accepted.

In the operation accepting device according to the present invention, the plurality of parts are a palm and a fingertip, and the part specifying means recognizes a palm or a fingertip.

According to the present invention, an operation performed with a palm and an operation performed with a fingertip are respectively accepted.

In the operation accepting device according to the present invention, the touch panel is in a dome shape, and when the part specifying means recognizes a palm, the operation accepting means accepts a sliding operation substantially in parallel to a meridian of the dome shape of the touch panel or a sliding operation rotating substantially around an apex of the dome shape of the touch panel.

According to the present invention, an operation in which a palm of an operator slides as if it drew a line substantially parallel to a meridian of the dome shape of the touch panel and an operation in which the palm is rotated, with his/her wrist or arm used as the axis, in the clockwise or counterclockwise direction around the apex of the dome shape of the touch panel are accepted.

The operation accepting device according to the present invention further includes a display section provided on a rear surface of the touch panel for displaying an operation screen, and when the part specifying means recognizes a fingertip, the operation accepting means accepts an operation in accordance with the operation screen.

According to the present invention, an operation in accordance with the operation screen displayed on the rear face of the touch panel is accepted.

The operation accepting device according to the present invention further includes function specifying means for specifying at least one function, out of a plurality of functions of an apparatus to be operated, on the basis of the contact part specified by the part specifying means, and the operation accepting means accepts an operation corresponding to the function specified by the function specifying means.

According to the present invention, a function in accordance with an accepted operation out of a plurality of functions of an apparatus to be operated is specified correspondingly to the contact part of the hand of the operator.

The computer program according to the present invention is a computer program for causing a computer to specify at least one operation out of a plurality of operations, the computer provided in an operation accepting device for accepting the plurality of operations on the basis of a contact position detected by a touch panel, the computer program including a part specifying step of causing the computer to specify a contact part of a hand of an operator contacted with the touch panel out of a plurality of parts of the hand on the basis of the contact position detected by the touch panel; and an operation specifying step of causing the computer to specify at least one operation out of the plurality of operations on the basis of the contact part specified in the part specifying step.

According to the present invention, the contact part of the hand of the operator contacted with the touch panel is specified, and an operation corresponding to the specified part is accepted.

The computer program according to the present invention is a computer program for causing a computer to specify at least one operation out of a plurality of operations, the computer provided in an operation accepting device for accepting the plurality of operations on the basis of one or a plurality of contact positions detected by a touch panel, the computer program including a part specifying step of causing the computer to specify a contact part of a hand of an operator contacted with the touch panel out of a plurality of parts of the hand on the basis of the number of contact positions detected by the touch panel; and an operation specifying step of causing the computer to specify at least one operation out of the plurality of operations on the basis of the contact part specified in the part specifying step.

According to the present invention, when the number of contact positions detected by the touch panel is plural, a palm or the like with a large contact area is specified as the contact part of the hand of the operator contacted with the touch panel, and when the number of contact positions detected by the touch panel is one, a finger or the like with a small contact area is specified. An operation corresponding to the thus specified part is accepted.

The computer program according to the present invention is a computer program for causing a computer to specify at least one operation out of a plurality of operations, the computer provided in an operation accepting device for accepting the plurality of operations on the basis of light intensity detected by a light intensity detecting section provided on a rear surface of a touch panel, the computer program including a part specifying step of causing the computer to specify a contact part of a hand of an operator contacted with the touch panel out of a plurality of parts of the hand on the basis of the light intensity detected by the light intensity detecting section; and an operation specifying step of causing the computer to specify at least one operation out of the plurality of operations on the basis of the part specified in the part specifying step.

According to the present invention, when the light intensity of the light passing through the touch panel is low, a palm or the like an operator in contact with a panel face with a large contact area and blocking the ambient light entering the touch panel face in a large area is specified. When the light intensity of the light passing through the touch panel is high, a finger or the like contacted with the panel face with a small contact area and blocking the ambient light in a small area is specified. An operation corresponding to the thus specified part is accepted.

### Effects of the Invention

According to the present invention, since the part specifying means for specifying a contact part of a hand of an operator contacted with the touch panel out of a plurality of parts of the hand and the operation specifying means for specifying an operation to be accepted on the basis of the specified contact part are provided, a plurality of kinds of operations respectively corresponding to the plural parts of a hand of an operator may be accepted.

### Brief Description of Drawings

FIG. 1 is a schematic diagram illustrating the structure of an image display system including an operation accepting device in Embodiment 1.
FIG. 2 is a block diagram illustrating an exemplary internal configuration of the operation accepting device in Embodiment 1.
FIG. 3 is a schematic plan view of the operation accepting device in Embodiment 1.
FIG. 4 is an explanatory diagram explaining a detection method for a linear fingertip sliding operation in Embodiment 1.
FIG. 5 is an explanatory diagram explaining a detection method for a circular fingertip sliding operation in Embodiment 1.
FIG. 6A is a schematic diagram illustrating a rightward/leftward linear palm sliding operation in Embodiment 1.
FIG. 6B is a schematic diagram illustrating the rightward/leftward linear palm sliding operation in Embodiment 1.
FIG. 7 is an explanatory diagram explaining a detection method for the rightward/leftward linear palm sliding operation in Embodiment 1.
FIG. 8A is a schematic diagram illustrating a circular palm sliding operation in Embodiment 1.
FIG. 8B is another schematic diagram illustrating the circular palm sliding operation in Embodiment 1.
FIG. 9A is an explanatory diagram explaining a detection method for the circular palm sliding operation in Embodiment 1.
FIG. 9B is another explanatory diagram explaining the detection method for the circular palm sliding operation in Embodiment 1.
FIG. 10A is a schematic diagram illustrating an example of an operation screen employed in Embodiment 1.
FIG. 10B is another schematic diagram illustrating the example of the operation screen employed in Embodiment 1.
FIG. 11 is a schematic diagram illustrating another example of the operation screen employed in Embodiment 1.
FIG. 12A is a schematic diagram illustrating another example of the operation screen employed in Embodiment 1.
FIG. 12B is a schematic diagram illustrating another example of the operation screen employed in Embodiment 1.
FIG. 13A is a schematic diagram illustrating another example of the operation screen employed in Embodiment 1.
FIG. 13B is a schematic diagram illustrating another example of the operation screen employed in Embodiment 1.
FIG. 14 is a schematic diagram illustrating an example of a channel changing screen employed in Embodiment 1.
FIG. 15 is a flowchart illustrating procedures in an operation accepting process in Embodiment 1.
FIG. 16 is a flowchart illustrating procedures in a palm sliding operation accepting process in Embodiment 1.
FIG. 17 is a block diagram illustrating the internal configuration of an operation accepting device in Embodiment 2.
FIG. 18 is a schematic diagram illustrating the structure of a touch panel section in Embodiment 2.
FIG. 19 is an explanatory diagram explaining a detection method for a circular palm sliding operation in Embodiment 2.
FIG. 20 is a flowchart illustrating procedures in an operation accepting process in Embodiment 2.
FIG. 21 is a flowchart illustrating procedures in a palm sliding operation accepting process in Embodiment 2.
FIG. 22 is a block diagram illustrating the internal configuration of an operation accepting device in Embodiment 3.
FIG. 23A is an explanatory diagram explaining a detection method for a circular palm sliding operation in Embodiment 3.
FIG. 23B is another explanatory diagram explaining the detection method for the circular palm sliding operation in Embodiment 3.
FIG. 24 is another explanatory diagram explaining the detection method for the circular palm sliding operation in Embodiment 3.
FIG. 25 is a flowchart illustrating procedures in an operation accepting process in Embodiment 3.
FIG. 26 is a flowchart illustrating procedures in a palm sliding operation accepting process in Embodiment 3.
FIG. 27 is a block diagram illustrating the internal configuration of an operation accepting device in Embodiment 4. Description of Reference Numerals

1, 6, 7, 8 operation accepting device
2 television set
3 antenna
4 delivery server
5 recording/reproducing device
N network
O origin
10 CPU
10a bus
11, 61, 71 touch panel section
12 display section
13 operation button section
14, 14A, 14B, 14C, 14D, 62 light intensity detecting section
15 display processing section
16 coordinate converting section
17 RAM
18 ROM
19 communication section
11a, 11b, 11c, 11d, 11e, 611a, 612a, 711a, 711b, 712a, 712b, 713a, 713b, 714a, 714b, 715a, 715b detection coordinate point
611 upper touch panel
612 lower touch panel
V1, V2, V3, V4, V5 movement vector
81 recording medium reading section
82 EEPROM
810 recording medium
811 computer program

### [Best Mode for Carrying Out the Invention]

### EMBODIMENT 1

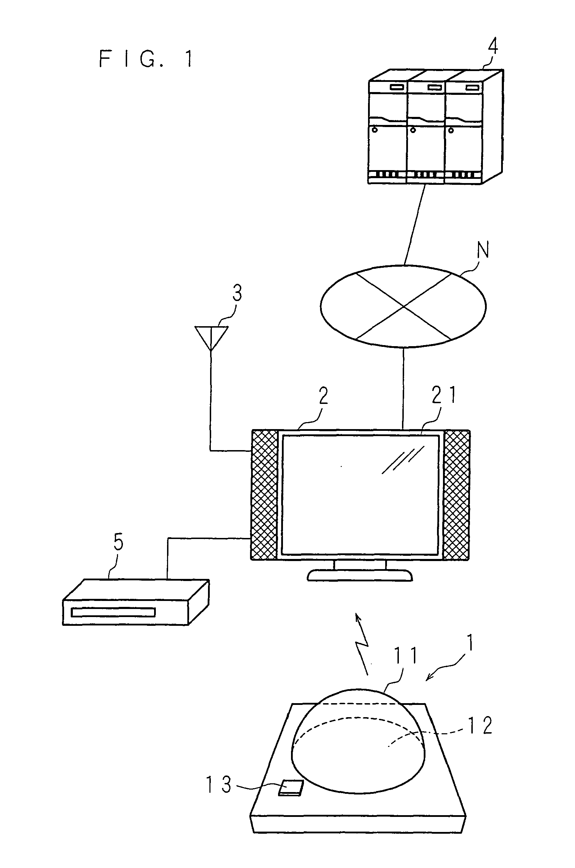

The present invention will now be specifically described with reference to the accompanying drawings illustrating embodiments thereof. FIG. 1 is a schematic diagram illustrating the structure of an image display system including an operation accepting device in Embodiment 1. The operation accepting device accepts operations corresponding to functions of an apparatus to be operated, such as a television set, a game player or a PC (personal computer), and may be provided inside the apparatus to be operated. In Embodiment 1, a television set will be described as an example of the apparatus to be operated by using the operation accepting device. In FIG. 1, a reference numeral 1 denotes the operation accepting device, which accepts operations corresponding to functions of a television set 2.

The operation accepting device 1 includes a display section 12 composed of a liquid crystal panel or the like for displaying an operation screen, a touch panel section 11 in a dome shape provided so as to cover the display section 12 for detecting a contact position of a hand of an operator, and an operation button section 13 for detecting a push with a finger of the operator. The touch panel section 11 is composed of a surface capacitive touch panel for detecting a single contact position. It is experimentally known, about the dome-shaped surface capacity touch panel, that when a fingertip with a small contact area comes into contact, substantially the center of a portion in contact with the fingertip is detected as the contact position and when a palm with a large contact area comes into contact, the centroid of the palm is detected as the contact position.

The television set 2 is connected to an antenna 3 for receiving broadcast waves of digital terrestrial broadcasting, BS (Broadcasting Satellite) broadcasting and the like, a delivery server 4 for providing VOD (Video On Demand) type services for delivering video contents requested through a network N, and a recording/reproducing device 5 for recording images displayed in a display section 21 and reproducing recorded images. Furthermore, the television set 2 includes the display section 21 composed of a liquid crystal panel, a loudspeaker and the like for displaying images, while simultaneously outputting voices accompanying images, selected from broadcast images obtained on the basis of broadcast waves received by the antenna 3, delivered images delivered from the delivery server 4 and reproduced images reproduced by the recording/reproducing device 5.

Moreover, the television set 2 has a channel selecting function to select a channel out of the received broadcast waves, an image selecting function to select images to be displayed in the display section 21 out of the images obtained on the basis of broadcast waves, the delivered images and the reproduced images reproduced by the recording/reproducing device 5, and a reproduction controlling function to control the reproducing function of the recording/reproducing device 5. Also, the television set 2 has a volume setting function to set the volume of voices to be output together with images, and an electronic program guide browsing function to display an electronic program guide. The operation accepting device 1 specifies, on the basis of a contact position detected by the touch panel section 11, one of a plurality of operations out of a linear fingertip sliding operation, a circular fingertip sliding operation, a linear palm sliding operation, a circular palm sliding operation and the like. Furthermore, the operation accepting device 1 specifies, on the basis of a specified contact part of an operator, at least one function out of a plurality of functions of the television set 2 and accepts an operation corresponding to the specified function.

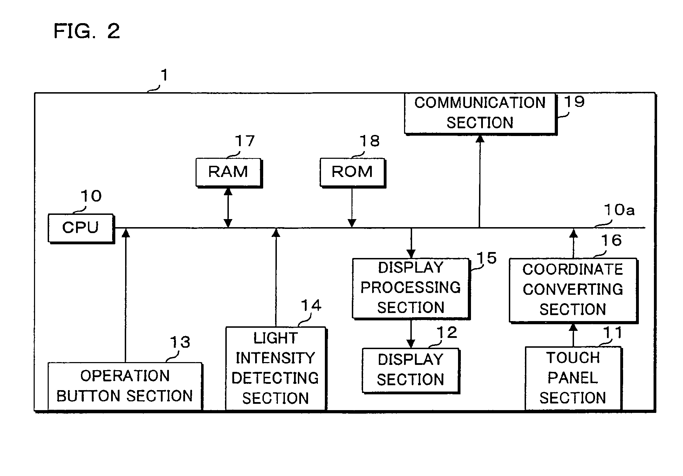

FIG. 2 is a block diagram illustrating an exemplary the internal configuration of the operation accepting device 1 in Embodiment 1. The operation accepting device 1 includes a coordinate converting section 16 for converting a coordinate point of a contact position detected by the touch panel section 11, a CPU (Central Processing Unit) 10 for controlling various hardware sections of the operation accepting device 1 through a bus 10a, a ROM (Read Only Memory) 18 for storing a computer program to be executed by the CPU 10, and a RAM (Random Access Memory) 17 for storing variables and the like generated during the execution of the computer program. The coordinate converting section 16 converts a coordinate point of a contact position detected by the touch panel section 11 having a dome-shaped curved face into a plane coordinate point and outputs the converted coordinate point as a detection coordinate point to the CPU 10 through the bus 10a.

For example, a coordinate point obtained by projecting, onto a bottom face, the apex of the dome shape of the touch panel section 11 may be regarded as the origin, so that a plane coordinate point on the bottom face may be expressed by using an X coordinate corresponding to the rightward/leftward direction of an operator and a Y coordinate corresponding to the forward/backward direction of the operator. Thus, a trajectory describing a line substantially parallel to a meridian of the dome shape on the touch panel section 11 is converted into a trajectory describing a substantially straight line on the plane coordinate system. The operation accepting device 1 further includes a light intensity detecting section (light intensity detecting means) 14, which is provided on a rear face of the touch panel section 11, for detecting light intensity of ambient light externally received through the touch panel section 11, and a display processing section 15 for processing image signals supplied from the CPU 10 through the bus 10a into signals displayable in the display section 12 and outputting the thus processed signals. The display section 12 is provided on the rear face of the touch panel section 11 and displays images corresponding to signals supplied from the display processing section 15.

The CPU 10 functions as part specifying means for specifying, on the basis of the light intensity detected by the light intensity detecting section 14, a contact part of a hand of an operator contacted with the touch panel section 11, operation specifying means for specifying, on the basis of the specified contact part, an operation to be accepted out of a plurality of operations, and operation accepting means for accepting the specified operation. Also, the CPU 10 functions as function specifying means for specifying, on the basis of the specified contact part, a function to be accepted for an operation out of a plurality of functions of the television set 2.

Furthermore, the operation accepting device 1 includes a communication section 19 for performing wireless communications in accordance with IrDA (Infrared Data Association) standard using infrared with the television set 2. The operation accepting device 1 sends, to the television set 2, an operation signal corresponding to an operation accepted on the basis of a detection coordinate point or the like detected by the touch panel section 11 and receives, from the television set 2, a signal corresponding to a function selected from the functions of the television set 2 and data such as an electronic program guide. The operation accepting device 1 and the television set 2 may be connected to each other not only through the wireless communication using infrared but also through, for example, a wireless LAN conforming to IEEE802.1 standard or wireless communication conforming to Bluetooth (registered trademark). Alternatively, the operation accepting device 1 and the television set 2 may be connected to each other through a signal cable for wire communication.

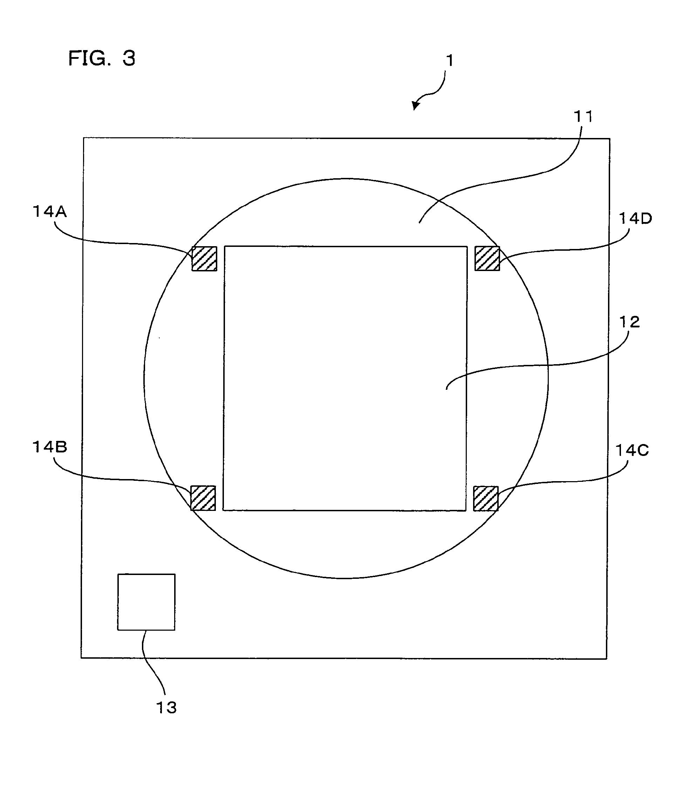

FIG. 3 is a schematic plan view of the operation accepting device 1 in Embodiment 1. The light intensity detecting section 14 of the operation accepting device 1 is composed of light intensity detecting sections 14A, 14B, 14C and 14D, which are provided along inner circumferential edge surrounding the center of the bottom face of the dome-shaped touch panel section 11 and detect light intensity respectively, and each of the light intensity detecting sections 14A, 14B, 14C and 14D supplies the detected light intensity to the CPU 10. The display section 12 is provided on the bottom face of the touch panel section 11 in an inner position than the light intensity detecting sections 14A, 14B, 14C and 14D. A sum of the light intensities respectively detected by the light intensity detecting sections 14A, 14B, 14C and 14D (hereinafter designated as light intensity S0) is largely reduced when a contact area of a hand of an operator in contact with the touch panel section 11 is large because a large part of ambient light entering the touch panel section 11 is blocked in such a case.

When the light intensity S0 is smaller than a prescribed value, the operation accepting device 1 determines that a palm of an operator having a larger contact area than a fingertip is in contact with the touch panel section 11, and hence specifies a palm as a contact part of a hand of the operator. Alternatively, when the light intensity S0 is larger than the prescribed value, the operation accepting device 1 determines that a fingertip of an operator having a smaller contact area than a palm is in contact with the touch panel section 11, and hence specifies a fingertip as the contact part of the hand of the operator. The prescribed value set with respect to the light intensity S0 is determined empirically and experimentally on the basis of the surface area of the touch panel section 11, the light intensity of the ambient light entering the touch panel section 11 in normal use, the average size of palms of hands of operators and the like, and may be precedently stored in the ROM 18. Next, procedures for the operation accepting device 1 specifying and accepting a fingertip sliding operation of an operator will be described.

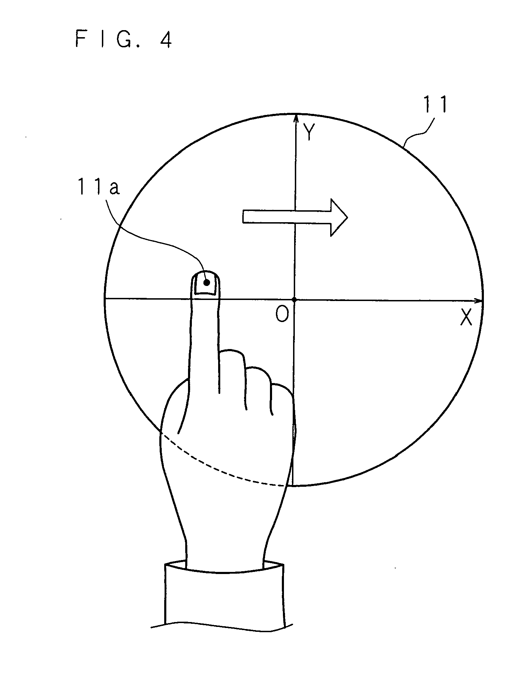

FIG. 4 is an explanatory diagram explaining a detection method for a linear fingertip sliding operation in Embodiment 1. In FIG. 4, an arrow outline with a blank inside denotes a moving direction of the forefinger of the operator in contact with the touch panel section 11. When the X coordinate of a detection coordinate point is increased or decreased with change of the Y coordinate not more than a prescribed value, the operation accepting device 1 specifies and accepts a rightward/leftward linear sliding operation. In the exemplary case of FIG. 4, substantially the center of the forefinger of the operator in contact with the touch panel section 11 is obtained as a detection coordinate point 11a, and when the detection coordinate point 11a slides in the rightward direction, a rightward linear sliding operation is accepted. Alternatively, when the Y coordinate of the detection coordinate point is increased or decreased with change of the X coordinate not more than a prescribed value, the operation accepting device 1 accepts a linear sliding operation along the forward/backward direction of the operator, namely, the upward/downward direction in the XY coordinates.

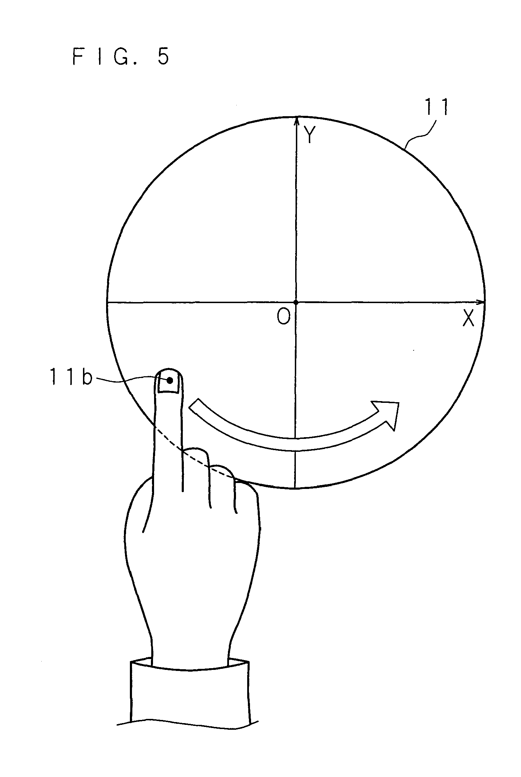

FIG. 5 is an explanatory diagram explaining a detection method for a circular fingertip sliding operation in Embodiment 1. In FIG. 5, an arrow outline with a blank inside denotes the moving direction of the forefinger of the operator in contact with the touch panel section 11. When the fingertip of the operator moves along a parallel of the dome shape of the touch panel section 11 so as to move the detection coordinate point in the clockwise or counterclockwise direction around the origin O of the XY coordinates set as the center, with change in the radial direction not more than a prescribed value, the operation accepting device 1 specifies and accepts a clockwise/counterclockwise circular sliding operation. In the exemplary case of FIG. 5, substantially the center of the forefinger of the operator in contact with the touch panel section 11 is obtained as a detection coordinate point 11b, and when the detection coordinate point 11b slides in the counterclockwise direction, a counterclockwise circular sliding operation is accepted. Next, procedures for the operation accepting device 1 specifying and accepting a palm sliding operation of an operator will be described.

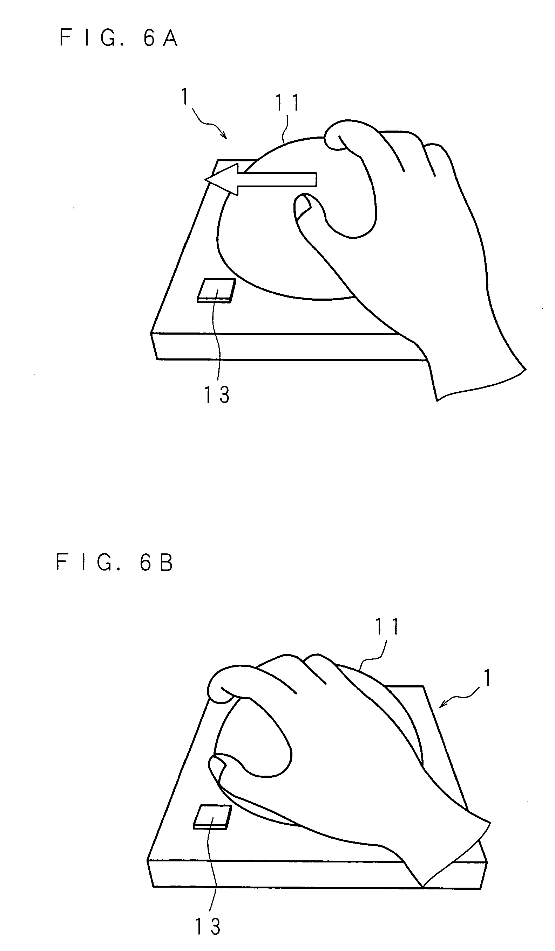

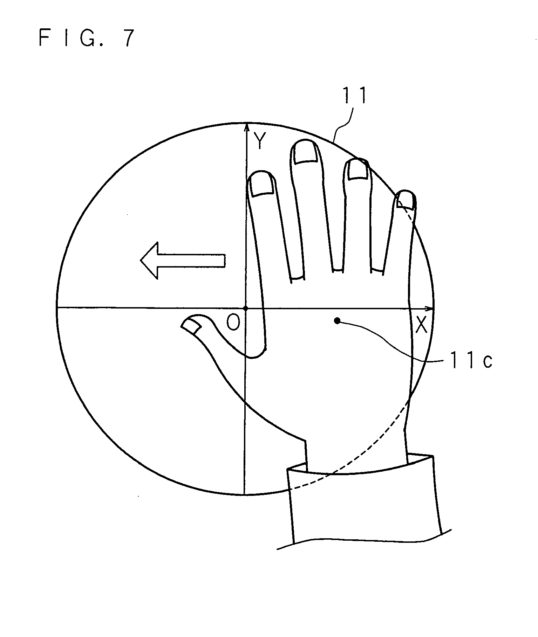

FIGS. 6A, 6B and 7 are schematic diagrams illustrating a linear palm sliding operation and an explanatory diagram explaining a detection method for the linear palm sliding operation in Embodiment 1. When the operation accepting device 1 specifies a palm as the contact part of the hand of the operator in contact with the touch panel section 11 and the palm of the operator moves in a substantially parallel direction to a meridian of the dome shape of the touch panel section 11 so as to increase/decrease the X coordinate of the detection coordinate point by a prescribed value or more, with change of the Y coordinate not more than a prescribed value, the operation accepting device 1 specifies and accepts a rightward/leftward linear palm sliding operation.

In the exemplary case illustrated in FIG. 6, the palm in contact with and covering the dome-shaped touch panel section 11 as illustrated in FIG. 6A moves leftward of the touch panel section 11 in the leftward direction illustrated with an arrow outline with a blank inside, which is substantially parallel to the meridian of the dome shape, as illustrated in FIG. 6B. In this case, the centroid of the palm of the operator in contact with the touch panel section 11 is obtained as a detection coordinate point 11c as illustrated in FIG. 7, and when the detection coordinate point 11c moves in the leftward direction by a prescribed distance or more, a leftward linear sliding operation is accepted. Alternatively, when the Y coordinate of the detection coordinate point is increased or decreased by a prescribed value or more with change of the X coordinate not more than a prescribed value, the operation accepting device 1 accepts an upward/downward linear palm sliding operation.

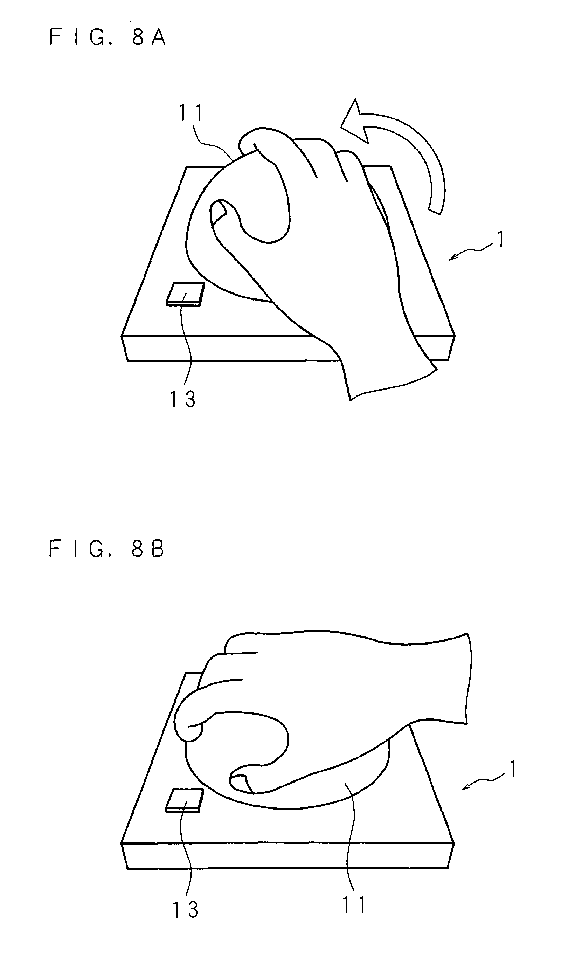

FIGS. 8A and 8B are schematic diagrams illustrating a circular palm sliding operation in Embodiment 1. When the operation accepting device 1 specifies a palm as the contact part of the hand of the operator in contact with the touch panel section 11 and a distance of the movement of the detection coordinate point on the touch panel section 11 is smaller than a prescribed value, the operation accepting device 1 obtains a sum of light intensities respectively detected by the light intensity detecting sections 14A and 14C (hereinafter designated as light intensity S1) and a sum of light intensities respectively detected by the light intensity detecting sections 14B and 14D (hereinafter designated as light intensity S2). When a state where the light intensity S1 is smaller than the light intensity S2 is changed to a state where the light intensity S1 is larger than the light intensity S2, the operation accepting device 1 specifies and accepts a clockwise circular sliding operation.

Alternatively, when a state where the light intensity S1 is larger than light intensity S2 is changed to a state where the light intensity S1 is smaller than the light intensity S2, the operation accepting device 1 specifies and accepts a counterclockwise circular sliding operation. In the exemplary case illustrated in FIG. 8, the palm in contact with and covering the dome-shaped touch panel section 11 as illustrated in FIG. 8A rotates in the counterclockwise direction as illustrated with an arrow outline with a blank inside around the apex of the dome shape as illustrated in FIG. 8B.

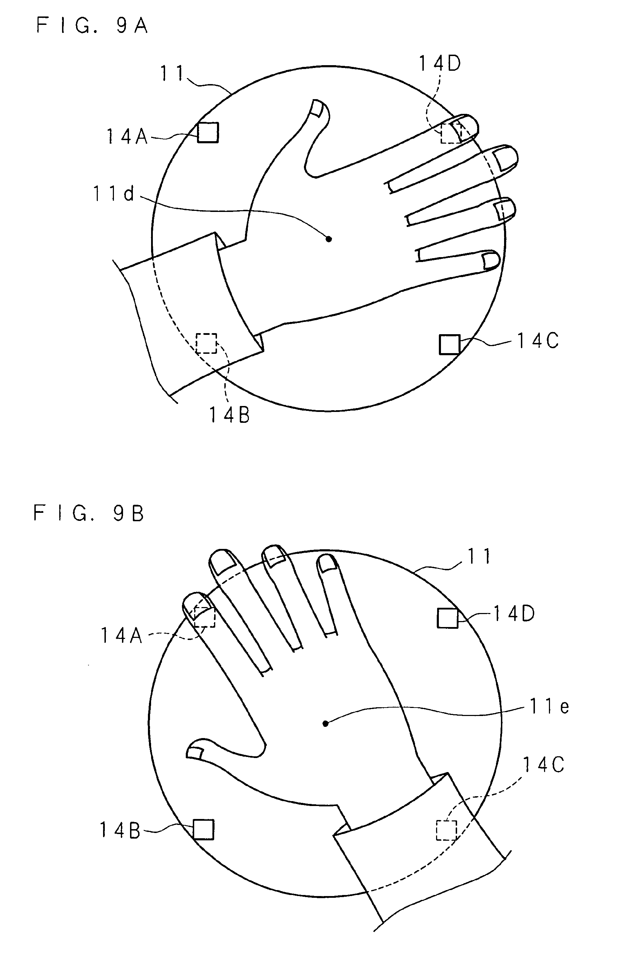

FIGS. 9A and 9B are explanatory diagrams explaining a detection method for the circular palm sliding operation in Embodiment 1. FIG. 9A corresponds to a case where a palm is in contact with the touch panel section 11 as illustrated in FIG. 8A. In this case, the light intensity S 1, that is, a sum of the light intensities respectively detected by the light intensity detecting sections 14A and 14C, is larger than the light intensity S2, that is, a sum of the light intensities respectively detected by the light intensity detecting sections 14B and 14D. FIG. 9B corresponds to a case where the palm has rotated in the counterclockwise direction on the touch panel section 11 as illustrated in FIG. 8B. In this case, the light intensity S1, that is, the sum of the light intensities respectively detected by the light intensity detecting sections 14A and 14C, is smaller than the light intensity S2, that is, the sum of the light intensities respectively detected by the light intensity detecting sections 14B and 14D. In the exemplary case illustrated in FIG. 9, when a distance of the movement from the detection coordinate point 11d to the detection coordinate point 11e is not more than a prescribed value, a counterclockwise circular palm sliding operation is accepted. Next, an example of correspondence between a linear fingertip sliding operation accepted by the operation accepting device 1 and a function of the television set 2 specified correspondingly to a fingertip will be described.

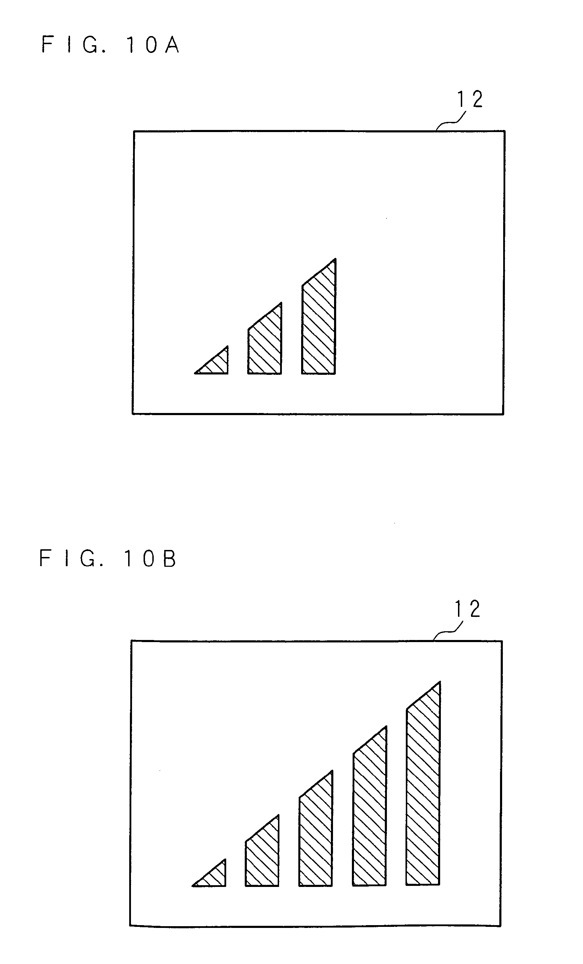

FIGS. 10A and 10B are schematic diagrams illustrating an example of an operation screen employed in Embodiment 1. When the operation accepting device 1 accepts a leftward or rightward linear fingertip sliding operation while the television set 2 is displaying images, the operation accepting device 1 displays, in the display section 12, an operation screen for setting a sound volume. In response to a rightward linear fingertip sliding operation, the operation accepting device 1 accepts an operation for increasing the set sound volume correspondingly to a sound volume setting function of the television set 2. In response to a leftward linear fingertip sliding operation, the operation accepting device 1 accepts an operation for decreasing the set sound volume correspondingly to the sound volume setting function of the television set 2. As illustrated in FIG. 10A, stripe-shaped bars in number corresponding to the set sound volume of the television set 1 are arranged at intervals, and when the rightward linear sliding operation is accepted, bars are additionally displayed in accordance with the rightward movement of the detection coordinate point as illustrated in FIG. 10B, and thus, the increase of the set sound volume is displayed. In other words, an operation in accordance with an operation screen displayed in the display section 12 is accepted through the linear fingertip sliding operation.

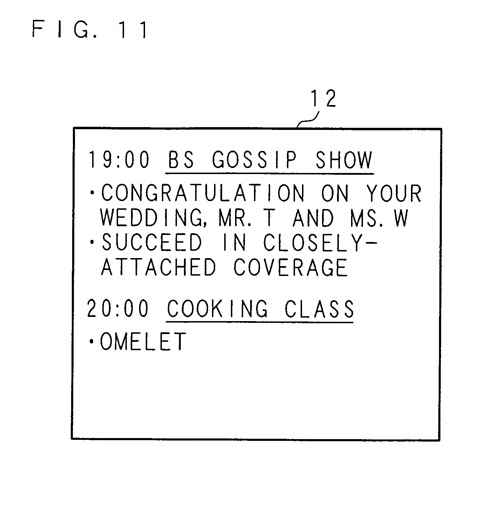

FIG. 11 is a schematic diagram illustrating another example of the operation screen employed in Embodiment 1. When the television set 2 is executing an electronic program guide browsing function, the operation accepting device 1 displays, on the basis of electronic program information received from the television set 2, an operation screen corresponding to the electronic program guide browsing function of the television set 2 and allowing an operator to browse the electronic program guide. In response to a downward linear sliding operation, the operation accepting device 1 scrolls downward the electronic program guide, that is, the display contents of the operation screen displayed in the display section 12. Alternatively, in response to an upward linear sliding operation, the operation accepting device 1 scrolls upward the electronic program guide, that is, the display contents of the operation screen.

In the exemplary operation screen of FIG. 11, a program name "BS gossip show", the starting time of the program "19:00" and the like are displayed together with the contents of the program. In this manner, scroll display of operation contents of the operation screen displayed in the display section 12 is accepted through the linear fingertip sliding operation. Next, an example of correspondence between a circular fingertip sliding operation accepted by the operation accepting device 1 and a function of the television set 2 specified correspondingly to a fingertip will be described.

When the television set 2 is executing a reproduction controlling function for controlling a reproducing operation of the recording/reproducing device 5, the operation accepting device 1 displays, in the display section 12, an operation screen corresponding to the reproduction controlling function of the television set 2. In response to a counterclockwise circular fingertip sliding operation, the operation accepting device 1 accepts an operation for commanding a rewinding reproducing operation to the television set 2 and displays, in the display section 12, an operation screen corresponding to the acceptance of the operation. When a click operation performed with a fingertip is accepted in the touch panel section 11 with the operation for commanding a rewinding reproducing operation accepted, the operation accepting device 1 accepts an operation for commanding a normal reproducing operation to the television set 2 and displays, in the display section 12, an operation screen corresponding to the acceptance of the operation.

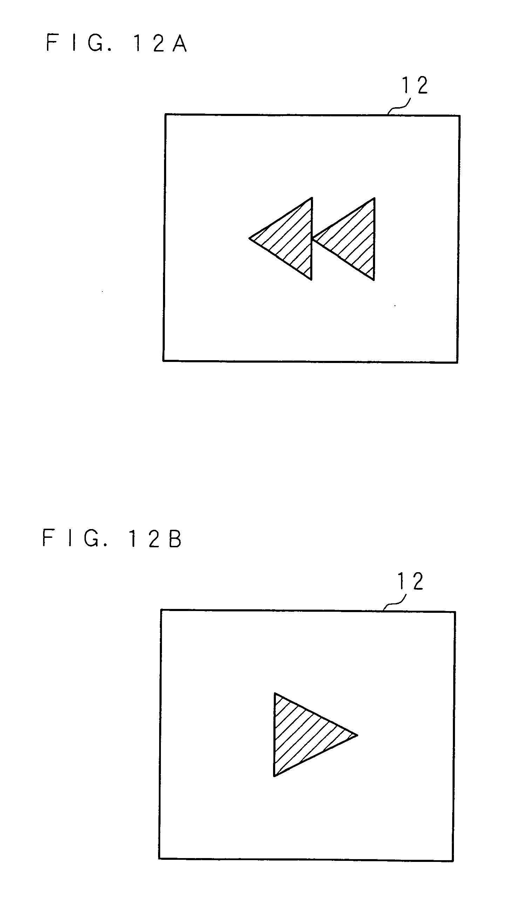

FIGS. 12A and 12B are schematic diagrams illustrating other examples of the operation screen employed in Embodiment 1. In the exemplary operation screen of FIG. 12A, two triangles each having an apex facing leftward are displayed adjacent to each other for showing that the operation for commanding a rewinding reproducing operation has been accepted. In the exemplary operation screen of FIG. 12B, one triangle having an apex facing rightward is displayed for showing that the operation for commanding a normal reproducing operation has been accepted.

When a clockwise circular fingertip sliding operation is accepted with the normal reproducing operation accepted, the operation accepting device 1 accepts an operation for commanding a fast playback operation to the television set 2 and displays, in the display section 12, an operation screen showing that the operation has been accepted. When a click operation performed with a fingertip is accepted in the touch panel section 11 with the operation for commanding a fast playback operation accepted, the operation accepting device 1 accepts an operation for commanding a normal reproducing operation to the television set 2 and displays, in the display section 12, an operation screen corresponding to the acceptance of the operation.

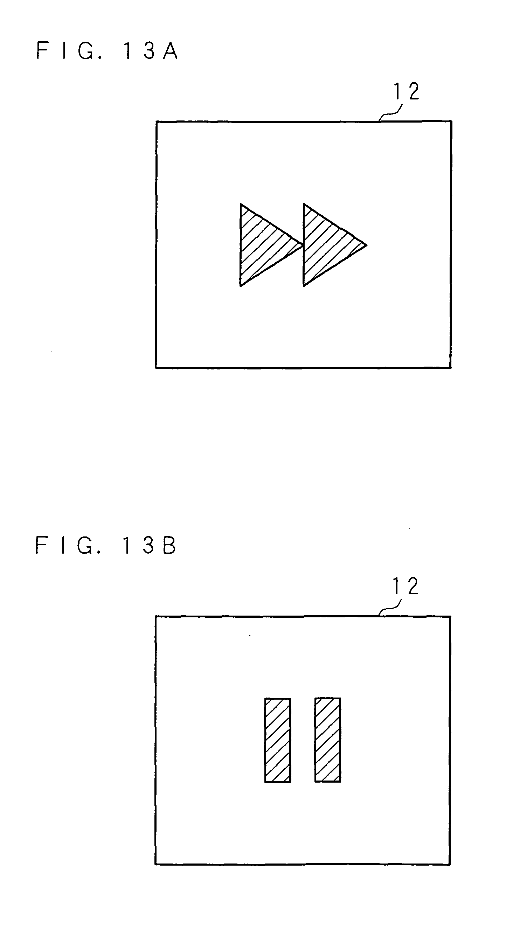

FIG. 13A and 13B are schematic diagram illustrating other examples of the operation screen employed in Embodiment 1. In the exemplary operation screen of FIG. 13A, two triangles each having an apex facing rightward are displayed adjacent to each other for showing that a fast playback operation has been accepted. In the exemplary operation screen of FIG. 13B, two stripes are displayed for showing that a pause operation has been accepted. Next, an example of correspondence between a linear palm sliding operation accepted by the operation accepting device 1 and a function of the television set 2 specified correspondingly to a palm will be described.

When a leftward or rightward linear palm sliding operation is accepted while the television set 2 is displaying images obtained by receiving broadcast waves, the operation accepting device 1 accepts a channel changing operation corresponding to a tuning function of the television set 2. In response to a rightward linear sliding operation, the operation accepting device 1 accepts a channel forward operation for changing the channel to be tuned in the television set 2 in the ascending order of the channel numbers. Alternatively, in response to a leftward linear sliding operation, the operation accepting device 1 accepts a channel backward operation for changing the channel to be tuned in the television set 2 in the descending order of the channel numbers. The television set 2 displays a channel changing screen in the display section 21 and changes the channel to be tuned in accordance with the channel forward operation or the channel backward operation accepted by the operation accepting device 1.

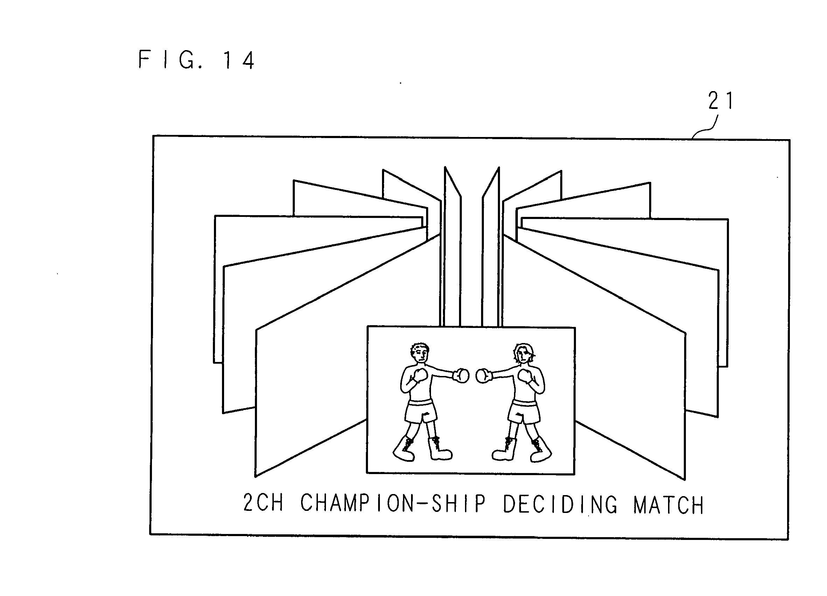

FIG. 14 is a schematic diagram illustrating an example of the channel changing screen employed in Embodiment 1. In the exemplary screen of FIG. 14, thumbnail images respectively corresponding to images broadcasted on a plurality of channels are displayed in the channel changing screen in the so-called zapping manner. Furthermore, a thumbnail image corresponding to the image of the channel currently tuned in the television set 2 is displayed at substantially the center of the channel changing screen together with the channel number "2 CH" and the program name "Champion-ship deciding match". In this manner, the channel forward operation or the channel backward operation in accordance with the channel changing screen displayed in the display section 21 of the television set 2 is accepted through the rightward/leftward linear palm sliding operation.

When an upward/downward linear palm sliding operation is accepted, the operation accepting device 1 accepts a genre changing operation for changing the genre of a broadcasted program on the basis of the electronic program guide so as to change the channel to be tuned to one broadcasting a program of the changed genre. When the operation accepting device 1 does not obtain a detection coordinate point, the television set 2 switches the screen to an image screen for full-screen displaying images of the selected channel. Next, an example of correspondence between a circular palm sliding operation accepted by the operation accepting device 1 and a function of the television set 2 specified correspondingly to a palm will be described.

The television set 2 accepts an operation for switching images to be displayed in the display section 21 among the broadcasted images, the delivered images and the reproduced images, and the switching order to switch these images is precedently set. When a clockwise circular palm sliding operation is accepted, the operation accepting device 1 accepts an image forward operation for switching images to be displayed in the display section 2 in the switching order precedently set. Alternatively, when a counterclockwise circular palm sliding operation is accepted, the operation accepting device 1 accepts an image backward operation for switching images to be displayed in the display section 2 in the order opposite to the switching order precedently set.

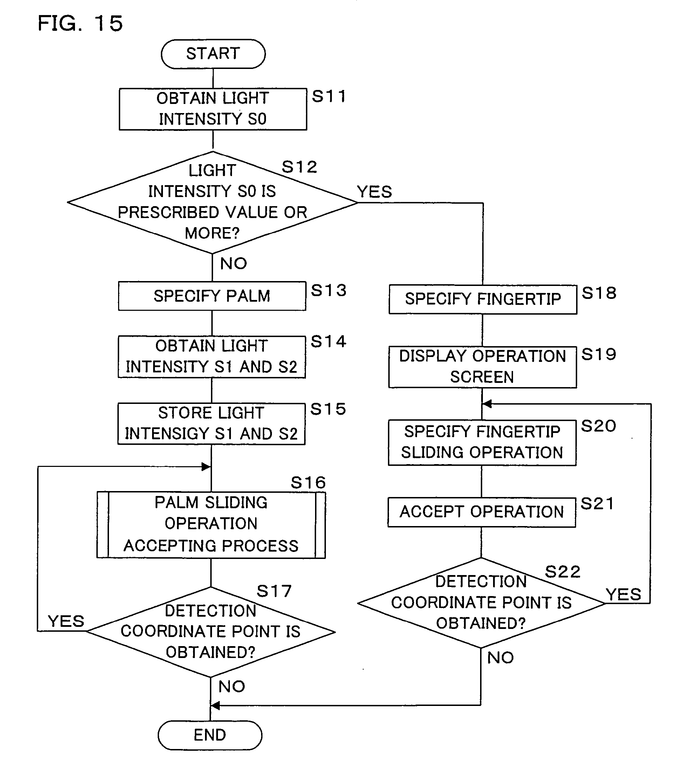

FIG. 15 is a flowchart illustrating procedures in an operation accepting process in Embodiment 1. The operation accepting process is executed by the CPU 10 when a hand of an operator comes into contact with the touch panel section 11 and a detection coordinate point is detected. The CPU 10 obtains the light intensity S0 (step S11). The CPU 10 determines whether or not the obtained light intensity S0 is a prescribed value or more (step S12). When the CPU 10 determines that the obtained light intensity S0 is not a prescribed value or more (i.e., NO in step S12), the CPU 10 specifies a palm as the contact part of the hand (step S13). The CPU 10 obtains the light intensities S1 and S2 (step S14) and stores the obtained light intensities S1 and S2 (step S15). The CPU 10 executes a palm sliding operation accepting process described later (step S16).

The CPU 10 determines whether or not a detection coordinate point is continuously obtained from the touch panel section 11 (step S17). When the CPU 10 determines that a detection coordinate point is obtained (i.e., YES in step S17), the CPU 10 returns the process to step S16 where the palm sliding operation accepting process is executed. When the CPU 10 determines that a detection coordinate point is not obtained (i.e., NO in step S17), the CPU 10 terminates the operation accepting process. When the CPU 10 determines that the obtained light intensity S0 is a prescribed value or more in step S12 where it is determined whether or not the obtained light intensity S0 is a prescribed value or more (i.e., YES in step S12), the CPU 10 specifies a fingertip as the contact part of the hand (step S18).

The CPU 10 displays an operation screen in the display section 12 (step S19), and specifies a fingertip sliding operation accepting process as the operation to be accepted (step S20). The CPU 10 accepts the specified operation (step S21). The CPU 10 determines whether or not a detection coordinate point is continuously obtained from the touch panel section 11 (step S22). When the CPU 10 determines that a detection coordinate point is obtained (i.e., YES in step S22), the CPU 10 returns the process to step S20 where the fingertip sliding operation is specified. When the CPU 10 determines that a detection coordinate point is not obtained (i.e., NO in step S22), the CPU 10 terminates the palm sliding operation accepting process.

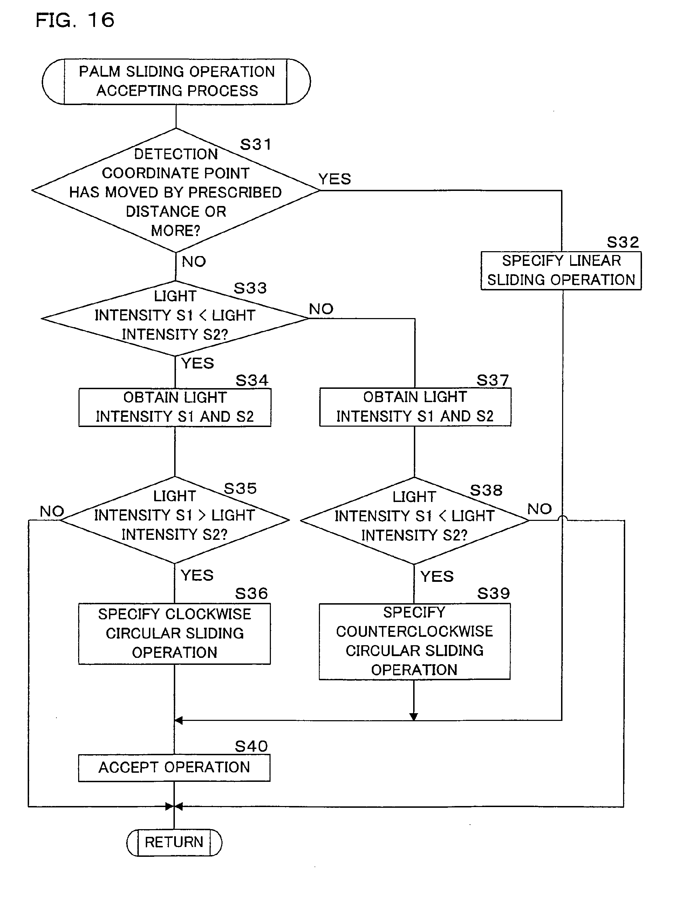

FIG. 16 is a flowchart illustrating procedures in the palm sliding operation accepting process in Embodiment 1. The CPU 10 determines whether or not the detection coordinate point has moved by a prescribed distance or more (step S31). When the CPU 10 determines that the detection coordinate point has moved by a prescribed distance or more (i.e., YES in step S31), the CPU 10 specifies a linear sliding operation as the operation to be accepted (step S32), accepts the specified operation (step S40) and terminates the palm sliding operation accepting process. When the CPU 10 determines that the detection coordinate point has not moved by a prescribed distance or more (i.e., NO in step S31), the CPU 10 determines whether or not the stored light intensity S1 is smaller than the stored light intensity S2 (step S33). When the CPU 10 determines that the stored light intensity S1 is smaller than the stored light intensity S2 (i.e., YES in step S33), the CPU 10 obtains the light intensities S1 and S2 detected by the light detecting section 14 (step S34).

The CPU 10 determines whether or not the obtained light intensity S1 is larger than the obtained light intensity S2 (step S35). When the CPU 10 determines that the obtained light intensity S1 is larger than the obtained light intensity S2 (i.e., YES in step S35), the CPU 10 specifies a clockwise circular sliding operation as the operation to be accepted (step S36) and proceeds the process to step S40 where the specified operation is accepted. When the CPU 10 determines that the obtained light intensity S1 is not larger than the obtained light intensity S2 (i.e., NO in step S35), the CPU 10 terminates the operation accepting process. When the CPU 10 determines that the stored light intensity S1 is not smaller than the stored light intensity S2 in step S33 where it is determined whether or not the stored light intensity S1 is smaller than the stored light intensity S2 (i.e., NO in step S33), the CPU 10 obtains the light intensities S1 and S2 detected by the light intensity detecting section 14 (step S37).

The CPU 10 determines whether or not the obtained light intensity S1 is smaller than the obtained light intensity S2 (step S38). When the CPU 10 determines that the obtained light intensity S1 is smaller than the obtained light intensity S2 (i.e., YES in step S38), the CPU 10 specifies a counterclockwise circular sliding operation as the operation to be accepted (step S39) and proceeds the process to step S40 where the specified operation is accepted. When the CPU 10 determines that the obtained light intensity S1 is not smaller than the obtained light intensity S2 (i.e., NO in step S38), the CPU 10 terminates the palm sliding operation accepting process.

Although a prescribed value of the light intensity S0 precedently stored in the ROM 18 is used for specifying a palm or a fingertip as a contact part of a hand of an operator in Embodiment 1, the present invention is not limited to this. Instead, for example, the light intensity S0 may be obtained when a hand of an operator is not in contact with the touch panel section 11 of the operation accepting device 1 and hence a detection coordinate point is not obtained, so that the prescribed value stored in the ROM 18 may be corrected on the basis of the thus obtained light intensity S0. In the case where the operation accepting device 1 is installed in a dark room, for example, the prescribed value stored in the ROM 18 may be corrected to be decreased on the basis of the light intensity S0 obtained when a hand of an operator is not in contact with the touch panel section 11.

Furthermore, the prescribed value of the light intensity S0 is not necessarily stored in the ROM 18 but a prescribed ratio may be stored instead. Specifically, for example, 30% is stored as the prescribed ratio in the ROM 18 and the light intensity S0 obtained when a detection coordinate point is not obtained is stored in the RAM 17, and when the detection coordinate point is obtained, if light intensity S0 smaller than 30% of the light intensity S0 stored in the RAM 17 is obtained, a palm may be specified.

Although the television set 2 switches the channel switching screen to the image screen when the operation accepting device 1 does not obtain a detection coordinate point in this embodiment, the present invention is not limited to this. Instead, for example, an image of a selected channel may be enlarged in a stepwise manner in the channel switching screen on the basis of a plurality of threshold values precedently set with respect to the light intensity S0, so as to be ultimately switched to the image screen. In this case, the image of the selected channel is enlarged as the palm is moved away from the touch panel section 11, so as to ultimately attain a full-screen image. The operation accepting device 1 may accept an operation corresponding to a combination of a pushing operation accepted in the operation button section 13 and a linear or circular palm or fingertip sliding operation.

### EMBODIMENT 2

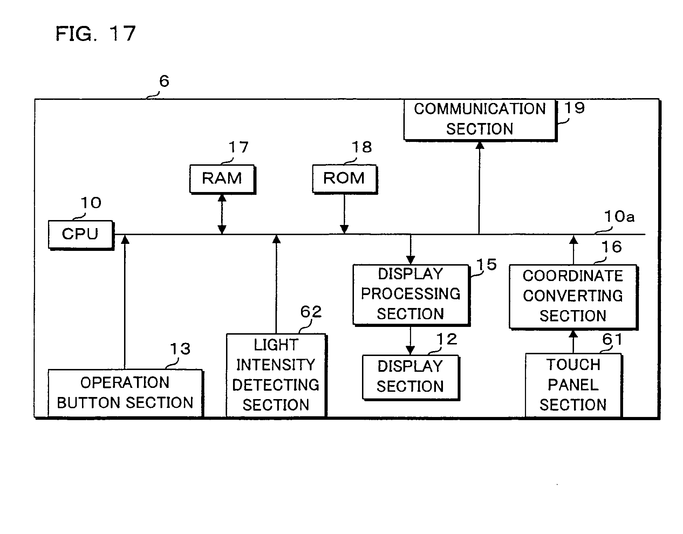

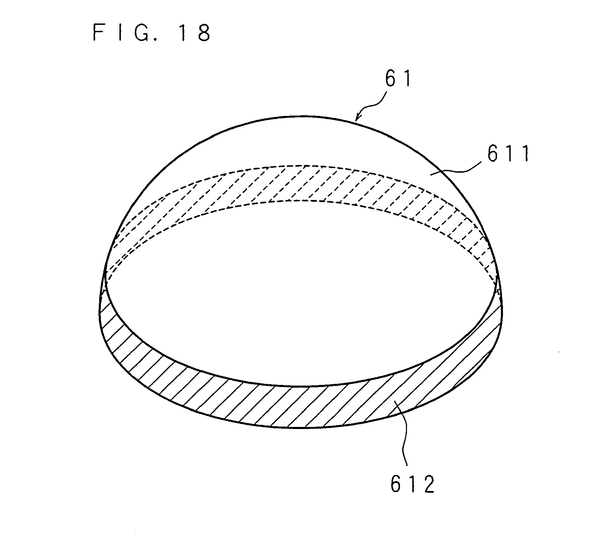

FIGS. 17 and 18 are respectively a block diagram illustrating the internal configuration of an operation accepting device and a schematic diagram illustrating the structure of a touch panel section in Embodiment 2. Although a circular palm sliding operation is accepted on the basis of the light intensity in Embodiment 1, the circular palm sliding operation is accepted on the basis of detection coordinate points respectively detected by two touch panels in Embodiment 2. In FIG. 17, a reference numeral 6 denotes an operation accepting device including a touch panel section 61 composed of two touch panels and a light intensity detecting section 62 for detecting light intensity. The light intensity detecting section 62 obtains light intensity S0, that is, a sum of light intensities respectively detected by light intensity detecting sections 14A, 14B, 14C and 14D. As illustrated in FIG. 18, the touch panel section 61 includes an upper touch panel 611 in a dome shape and a lower touch panel 612 in substantially a cylindrical shape connected to the circumferential edge of the upper touch panel 611, and obtains, as detection coordinate points, coordinate points respectively detected by the upper touch panel 611 and the lower touch panel 612.

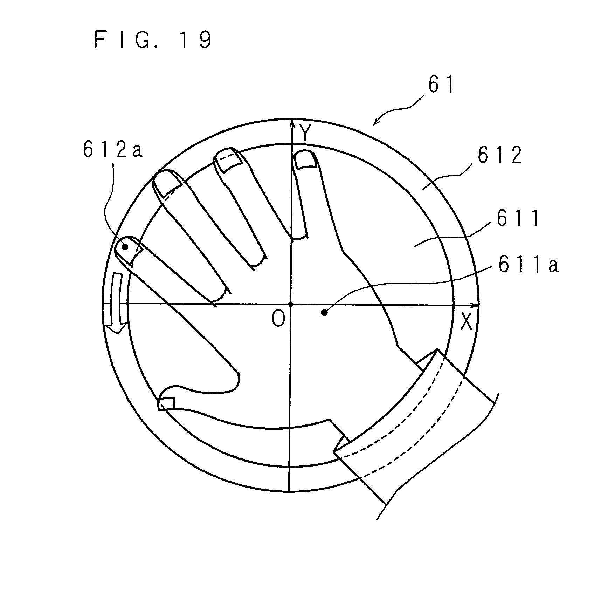

FIG. 19 is an explanatory diagram explaining a detection method for a circular palm sliding operation in Embodiment 2. In FIG. 19, an arrow outline with a blank inside denotes a direction of circularly moving a hand of an operator in contact with and covering the dome-shaped touch panel section 61. Also in FIG. 19, reference numerals 611a and 612a respectively denote a detection coordinate point detected by the upper touch panel 611 correspondingly to the centroid of a palm and a detection coordinate point detected by the lower touch panel 612 correspondingly to substantially the center of a fingertip. When a plurality of fingertips of an operator are in contact with the lower touch panel 612, the lower touch panel 612, that is, a capacitive touch panel, detects substantially the center of one of the fingertips as a detection coordinate point. When a distance of the movement of the detection coordinate point 611a is not more than a prescribed value, the operation accepting device 1 accepts a clockwise or counterclockwise circular palm sliding operation depending upon clockwise or counterclockwise movement of the detection coordinate point 612a.

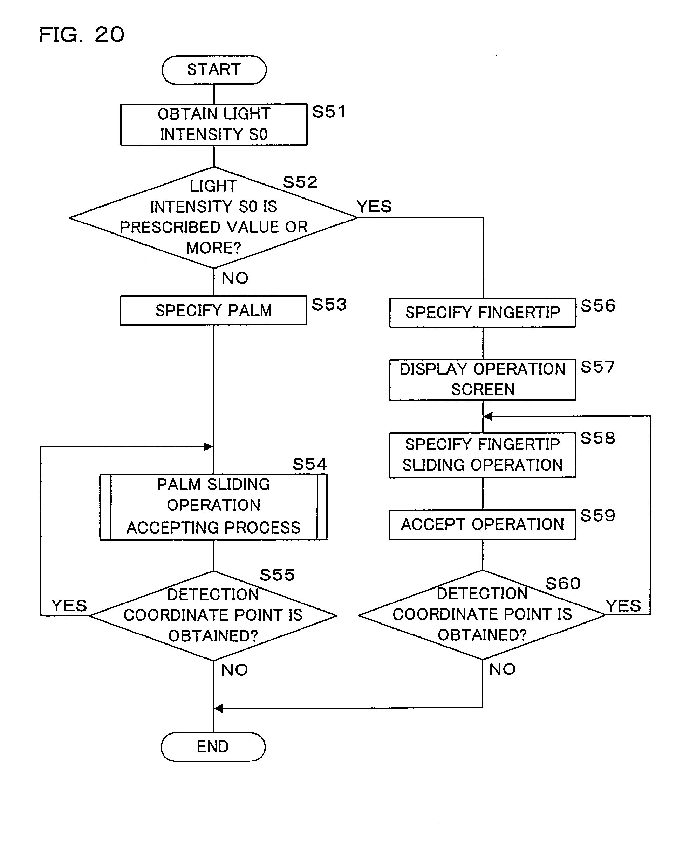

FIG. 20 is a flowchart illustrating procedures in an operation accepting process in Embodiment 2. The CPU 10 obtains light intensity S0 (step S51). The CPU 10 determines whether or not the obtained light intensity S0 is a prescribed value or more (step S52). When the CPU 10 determines that the obtained light intensity S0 is not a prescribed value or more (i.e., NO in step S52), the CPU 10 specifies a palm as a contact part of a hand (step S53). The CPU 10 executes a palm sliding operation accepting process described later (step S54). The CPU 10 determines whether or not a detection coordinate point is continuously obtained from the touch panel section 61 (step S55). When the CPU 10 determines that a detection coordinate point is obtained (i.e., YES in step S55), the CPU 10 returns the process to step S54 where the palm sliding operation accepting process is executed.

When the CPU 10 determines that a detection coordinate point is not obtained (i.e., NO in step S55), the CPU 10 terminates the operation accepting process. When the CPU 10 determines that the obtained light intensity S0 is a prescribed value or more in step S52 where it is determined whether or not the obtained light intensity S0 is a prescribed value or more (i.e., YES in step S52), the CPU 10 specifies a fingertip as the contact part of the hand (step S56). The CPU 10 displays an operation screen in the display section 12 (step S57), specifies a fingertip sliding operation as an operation to be accepted (step S58) and accepts the specified operation (step S59). The CPU 10 determines whether or not a detection coordinate point is continuously obtained from the touch panel section 61 (step S60). When the CPU 10 determines that a detection coordinate point is obtained (i.e., YES in step S60), the CPU 10 returns the process to step S58 where the fingertip sliding operation is specified. When the CPU 10 determines that a detection coordinate point is not obtained (i.e., NO in step S60), the CPU 10 terminates the operation accepting process.

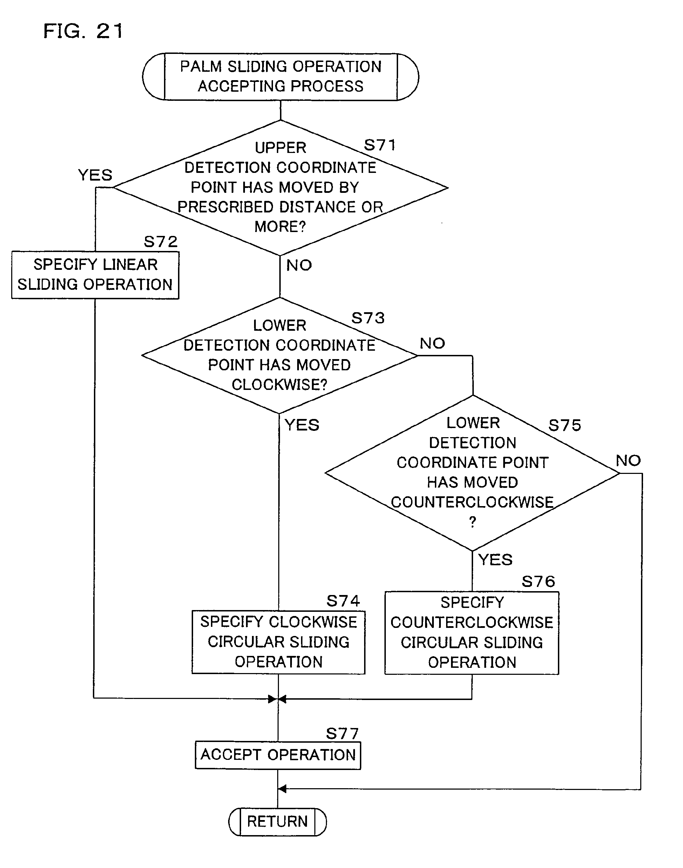

FIG. 21 is a flowchart illustrating procedures in the palm sliding operation accepting process in Embodiment 2. The CPU 10 determines whether or not an upper detection coordinate point detected by the upper touch panel 611 has moved by a prescribed distance or more (step S71). When the CPU 10 determines that the upper detection coordinate point has moved by a prescribed distance or more (i.e., YES in step S71), the CPU 10 specifies a linear sliding operation as an operation to be accepted (step S72), accepts the specified operation (step S77) and terminates the palm sliding operation accepting process. When the CPU 10 determines that the upper detection coordinate point has not moved by a prescribed distance or more (i.e., NO in step S71), the CPU 10 determines whether or not a lower detection coordinate point detected by the lower touch panel 612 has moved clockwise (step S73).

When the CPU 10 determines that the lower detection coordinate point has moved clockwise (i.e., YES in step S73), the CPU 10 specifies a clockwise circular sliding operation as an operation to be accepted (step S74) and proceeds the process to step S77 where the specified operation is accepted. When the CPU 10 determines that the lower detection coordinate point has not moved clockwise (i.e., NO in step S73), the CPU 10 determines whether or not the lower detection coordinate point has moved counterclockwise (step S75). When the CPU 10 determines that the lower detection coordinate point has move counterclockwise (i.e., YES in step S75), the CPU 10 specifies a counterclockwise circular sliding operation as an operation to be accepted (step S76) and proceeds the process to step S77 where the specified operation is accepted. When the CPU 10 determines that the lower coordinate point has not moved counterclockwise (i.e., NO in step S75), the CPU 10 terminates the palm sliding operation accepting process.

Although the light intensity detecting section 62 is composed of the light intensity detecting sections 14A, 14B, 14C and 14D in this embodiment, the present invention is not limited to this but the light intensity detecting section may be composed of merely one light intensity detecting section capable of detecting a difference in the light intensity caused between a palm and a fingertip. Furthermore, although a palm or a fingertip is specified by determining whether or not the light intensity S0 obtained by the light intensity detecting section has a value not less than a prescribed value in the procedures in the operation accepting process of this embodiment, the present invention is not limited to this. Instead, a palm may be specified when the upper touch panel 611 and the lower touch panel 612 simultaneously detect coordinate points and a fingertip may be specified when one of the upper touch panel 611 and the lower touch panel 612 detects a coordinate point. In this case, there is no need to provide the light intensity detecting section 62 in the touch panel section.

Embodiment 2 is thus composed, and the other structures, functions and processes not mentioned above are substantially the same as those described in Embodiment 1, and hence, like reference numerals are used to refer to like elements so as to omit the detailed description.

### EMBODIMENT 3

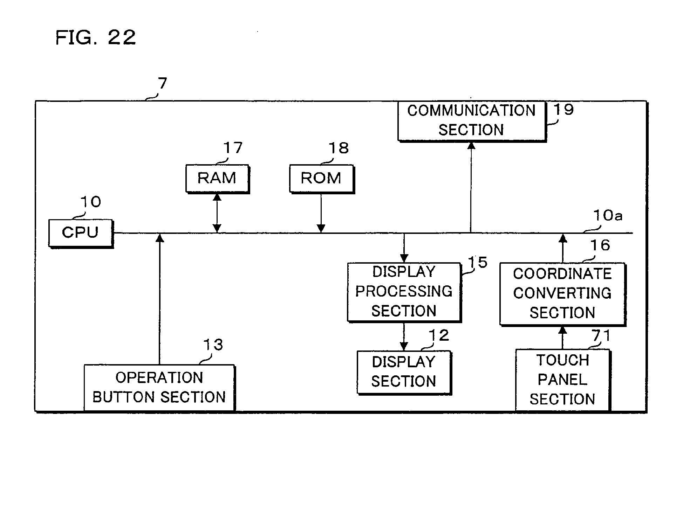

FIG. 22 is a block diagram illustrating the internal configuration of an operation accepting device in Embodiment 3. In Embodiment 3, a touch panel section is capable of simultaneously detecting a plurality of coordinate points while the touch panel section of Embodiment 1 or 2 is capable of detecting a single coordinate point. In FIG. 22, a reference numeral 7 denotes an operation accepting device including a projected capacitive type touch panel section 71 capable of detecting a plurality of contact positions. When one detection coordinate point is obtained, the operation accepting device 7 specifies a fingertip as a contact part of a hand of an operator in contact with the touch panel, and when a plurality of detection coordinate points are obtained, the operation accepting device 7 specifies a palm. A CPU 10 functions as part specifying means for specifying a contact part of a hand of an operator contacted with the touch panel section 71 on the basis of the number of detection coordinate points detected by the touch panel section 71.

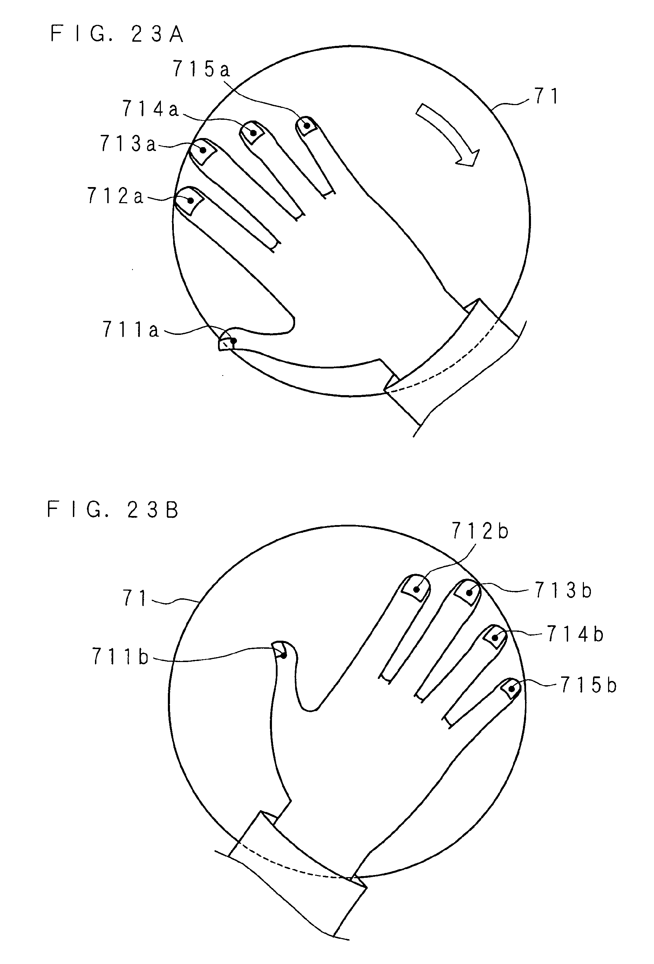

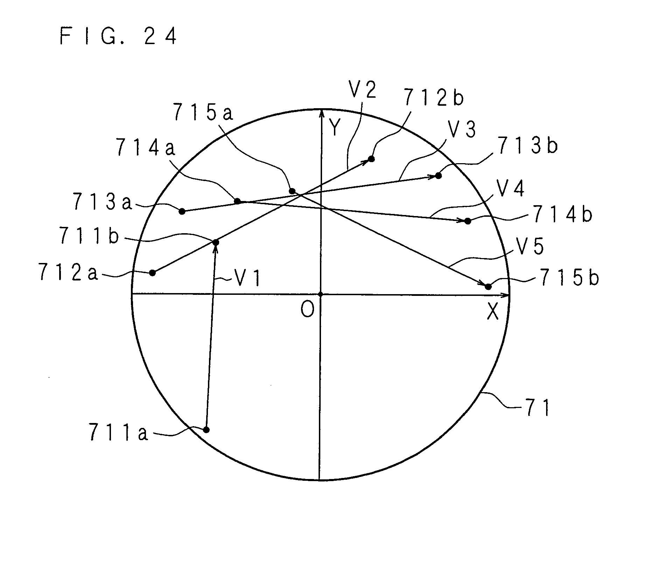

FIGS. 23A, 23B and 24 are explanatory diagrams explaining a detection method for a circular palm sliding operation in Embodiment 3. When the operation accepting device 7 specifies a palm as the contact part of the hand of the operator and respective detection coordinate points move, the operation accepting device 7 calculates a movement vector from the respective detection coordinate points obtained before the movement to respective detection coordinate points obtained after the movement. In the exemplary case illustrated in FIG. 23, detection coordinate points 711a, 712a, 713a, 714a and 715a corresponding to respective fingers of an operator with a palm of the operator contacted with and covering the dome-shaped touch panel section 11 as illustrated in FIG. 23A are detected, and as the palm circularly moves in the clockwise direction illustrated with an arrow outline with a blank inside, the respective detection coordinate points move to detection coordinate points 711b, 712b, 713b, 714b and 715b illustrated in FIG. 23B.

In this case, the operation accepting device 7 calculates, as illustrated in FIG. 24, a movement vector V1 starting from the detection coordinate point 711a to the detection coordinate point 711b, a movement vector V2 starting from the detection coordinate point 712a to the detection coordinate point 712b, a movement vector V3 starting from the detection coordinate point 713a to the detection coordinate point 713b, a movement vector V4 starting from the detection coordinate point 714a to the detection coordinate point 714b and a movement vector V5 starting from the detection coordinate point 715a to the detection coordinate point 715b. When the plural movement vectors thus calculated are all composed of merely X-direction vectors, which are inclined against the X-axis at an angle not more than a prescribed angle and are substantially parallel to the X-axis, the operation accepting device 7 accepts a linear sliding operation in the X-direction, namely, a rightward/leftward linear sliding operation.

When the plural movement vectors calculated as above are all composed of merely Y-direction vectors, which are inclined against the Y-axis at an angle not more than a prescribed angle and are substantially parallel to the Y-axis, the operation accepting device 7 accepts a linear sliding operation in the Y-direction, namely, an upward/downward linear sliding operation. Alternatively, when the plural movement vectors calculated as above are not composed of X-direction vectors or Y-direction vectors alone, the operation accepting device 7 accepts a circular sliding operation on the basis of the calculated plural vectors.

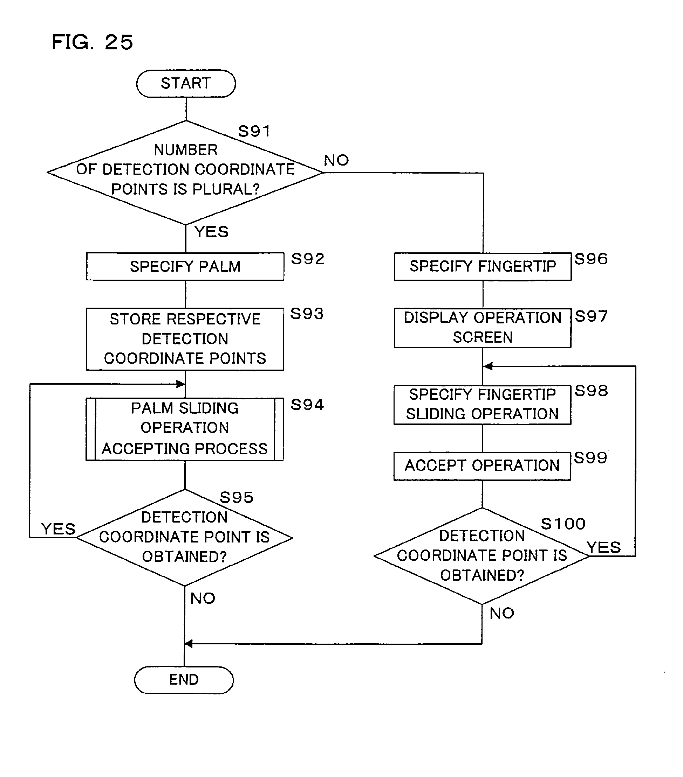

FIG. 25 is a flowchart illustrating procedures in an operation accepting process in Embodiment 3. The CPU 10 determines whether or not the number of detection coordinate points is plural (step S91). When the CPU 10 determines that the number of the detection coordinate points is plural (i.e., YES in step S91), the CPU 10 specifies a palm as the contact part of the hand of the operator (step S92). The CPU 10 stores the respective detection coordinate points (step S93) and executes a palm sliding operation accepting process described later (step S94). The CPU 10 determines whether or not a detection coordinate point is continuously obtained from the touch panel section 71 (step S95). When the CPU 10 determines that a detection coordinate point is obtained (i.e., YES in step S95), the CPU 10 returns the process to step S94 where the palm sliding operation accepting process is executed.

When the CPU 10 determines that a detection coordinate point is not obtained (i.e., NO in step S95), the CPU 10 terminates the operation accepting process. When the CPU 10 determines that the number of detection coordinate points is not plural in step S91 where the number is determined to be plural or not (i.e., NO in step S91), the CPU 10 specifies a fingertip as the contact part of the hand (step S96). The CPU 10 displays an operation screen in the display section 12 (step S97), specifies a fingertip sliding operation accepting process as an operation to be accepted (step S98), and accepts the specified operation (step S99). The CPU 10 determines whether or not a detection coordinate point is continuously obtained from the touch panel section 71 (step S100). When the CPU 10 determines that a detection coordinate point is obtained (i.e., YES in step S100), the CPU 10 returns the process to step S98 where the fingertip sliding operation is specified. When the CPU 10 determines that a detection coordinate point is not obtained (i.e., NO in step S100), the CPU 10 terminates the operation accepting process.

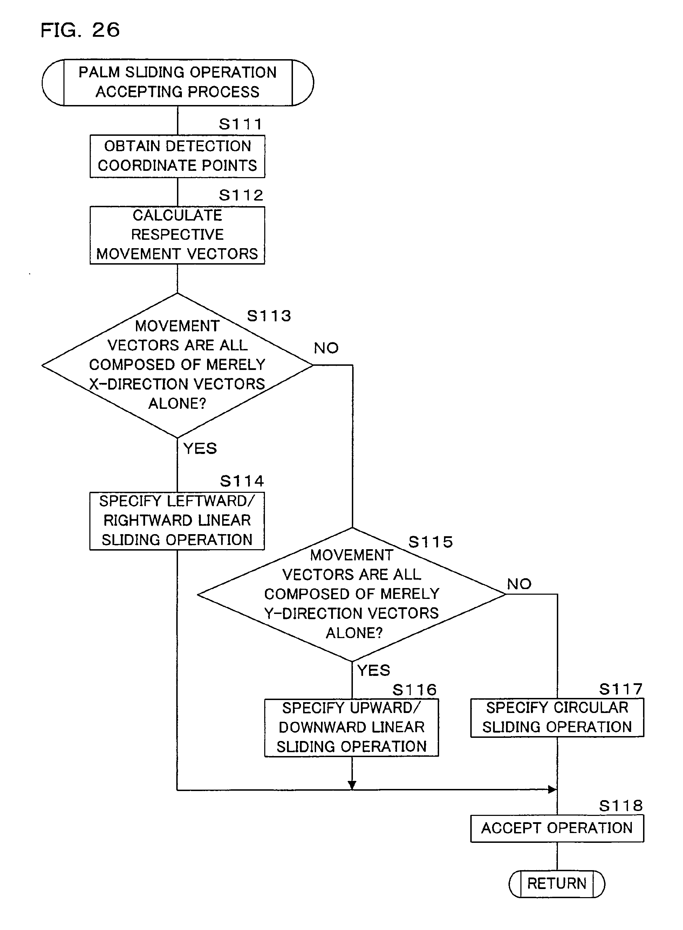

FIG. 26 is a flowchart illustrating procedures in the palm sliding operation accepting process in Embodiment 3. The CPU 10 obtains detection coordinate points (step S111) and calculates respective movement vectors respectively starting from a plurality of detection coordinate points having been stored to the obtained detection coordinate points (step S112). The CPU 10 determines whether or not the calculated movement vectors are all composed of merely X-direction vectors alone (step S113). When the CPU 10 determines that the calculated movement vectors are composed of X-direction vectors alone (i.e., YES in step S113), the CPU 10 specifies a rightward/leftward linear sliding operation as the operation to be accepted (step S114), accepts the specified operation (step S118) and terminates the palm sliding operation accepting process.

When the CPU 10 determines that the calculated movement vectors are not all composed of X-direction vectors alone (i.e., NO in step S113), the CPU 10 determines whether or not the calculated movement vectors are all composed of Y direction vectors alone (step S115). When the CPU 10 determines that the calculated movement vectors are all composed of Y direction vectors alone (i.e., YES in step S115), the CPU 10 specifies an upward/downward linear sliding operation as an operation to be accepted (step S116) and proceeds the process to step S118 where the specified operation is accepted. When the CPU 10 determines that the calculated movement vectors are not all composed of Y direction vectors alone (i.e., NO in step S115), the CPU 10 specifies a clockwise or counterclockwise circular sliding operation on the basis of the calculated movement vectors (step S117) and proceeds the process to step S118 where the specified operation is accepted.

Embodiment 3 is thus composed, and the other structures and functions not mentioned above are substantially the same as those described in Embodiment 1, and hence, like reference numerals are used to refer to like elements so as to omit the detailed description.

### EMBODIMENT 4

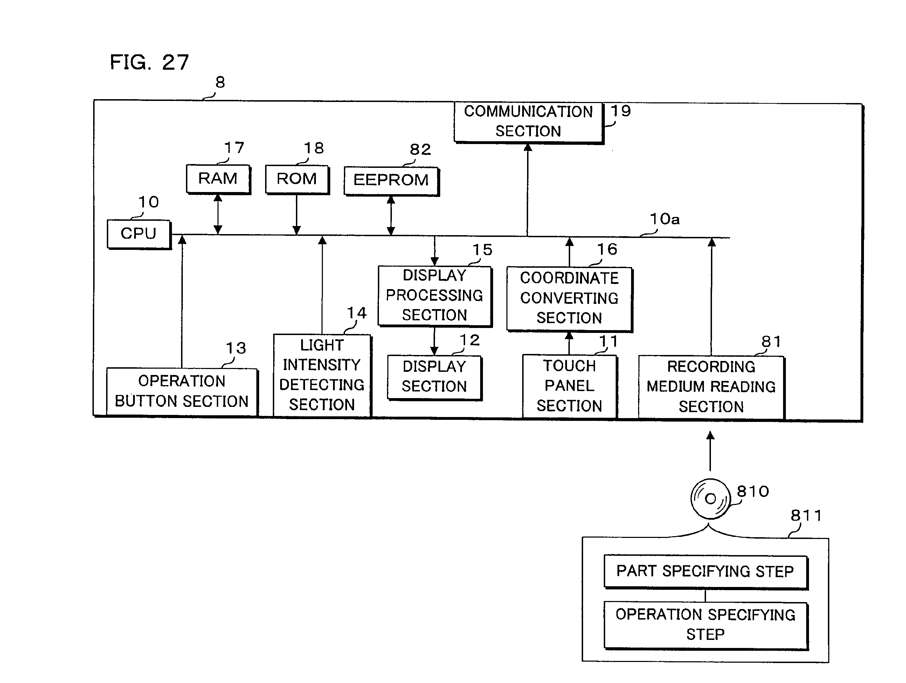

FIG. 27 is a block diagram illustrating the internal configuration of an operation accepting device in Embodiment 4. While the computer program stored in the ROM is read to be executed in Embodiment 1, a computer program stored in a rewritable EEPROM (Electrically Erasable Programmable Read-Only Memory) is read to be executed in Embodiment 4. In FIG. 27, a reference numeral 8 denotes the operation accepting device, which includes an EEPROM 82 composed of a flash memory or the like connected to a CPU 10 through a bus 10a and a recording medium reading section 81.

In the operation accepting device 8, a computer program 811 is read from a recording medium 810, such as a CD (Compact Disk)-ROM or a DVD (Digital Versatile Disk)-ROM loaded in the recording medium reading section 81, to be stored in the EEPROM 82. The CPU 10 executes processes necessary for the operation accepting device 8 in accordance with the computer program 811 of the present invention read from the EEPROM 82. According to the computer program 811, a contact part of a hand of an operator contacted with a touch panel section 11 is specified on the basis of light intensity detected by a light intensity detecting section 14 (corresponding to part specifying step).

According to the computer program 811, an operation to be accepted by the operation accepting device 8 is specified on the basis of the specified part (corresponding to operation specifying step). The computer program 811 of the present invention is not necessarily read from the recording medium 810 and stored in the EEPROM 82 but instead, the EEPROM 82 storing the computer program 811 at time of forwarding from a manufacturer may be built in the operation accepting device 8.

Embodiment 4 is thus composed, and the other structures, functions and processes not mentioned above are substantially the same as those described in Embodiments 1, 2 and 3, and hence, like reference numerals are used to refer to like elements so as to omit the detailed description.

## Claims

1. An operation accepting device, comprising a touch panel for detecting a contact position, for accepting a plurality of operations on the basis of the contact position detected by the touch panel, **characterized by** further comprising:
part specifying means for specifying a contact part of a hand of an operator contacted with the touch panel out of a plurality of parts of the hand on the basis of the contact position detected by the touch panel;
operation specifying means for specifying at least one operation out of the plurality of operations on the basis of the contact part specified by the part specifying means; and
operation accepting means for accepting the operation specified by the operation specifying means on the basis of the contact position detected by the touch panel.

2. The operation accepting device according to claim 1,
wherein the touch panel is capable of detecting a plurality of contact positions,
wherein the part specifying means specifies the contact part on the basis of the number of contact positions detected by the touch panel.

3. An operation accepting device, comprising a touch panel for detecting a contact position, for accepting a plurality of operations on the basis of the contact position detected by the touch panel, **characterized by** further comprising:
light intensity detecting means provided on a rear surface of the touch panel for detecting light intensity of light passing through the touch panel;
part specifying means for specifying a contact part of a hand of an operator contacted with the touch panel out of a plurality of parts of the hand on the basis of the light intensity detected by the light intensity detecting means;
operation specifying means for specifying at least one operation out of the plurality of operations on the basis of the contact part specified by the part specifying means; and
operation accepting means for accepting the operation specified by the operation specifying means on the basis of the contact position detected by the touch panel.

4. The operation accepting device according to any one of claims 1 to 3,
wherein the touch panel is in a dome shape.

5. The operation accepting device according to any one of claims 1 to 4,
wherein the plurality of parts are a palm and a fingertip,
wherein the part specifying means recognizes a palm or a fingertip.

6. The operation accepting device according to claim 5,
wherein the touch panel is in a dome shape,
wherein when the part specifying means recognizes a palm, the operation accepting means accepts a sliding operation substantially in parallel to a meridian of the dome shape of the touch panel or a sliding operation rotating substantially around an apex of the dome shape of the touch panel.

7. The operation accepting device according to claim 5 or claim 6, further comprising:
a display section provided on a rear surface of the touch panel for displaying an operation screen,
wherein when the part specifying means recognizes a fingertip, the operation accepting means accepts an operation in accordance with the operation screen.

8. The operation accepting device according to any one of claims 1 to 7, further comprising:
function specifying means for specifying at least one function, out of a plurality of functions of an apparatus to be operated, on the basis of the contact part specified by the part specifying means,
wherein the operation accepting means accepts an operation corresponding to the function specified by the function specifying means.

9. A computer program for causing a computer to specify at least one operation out of a plurality of operations, the computer provided in an operation accepting device for accepting the plurality of operations on the basis of a contact position detected by a touch panel,
the computer program comprising:
a part specifying step of causing the computer to specify a contact part of a hand of an operator contacted with the touch panel out of a plurality of parts of the hand on the basis of the contact position detected by the touch panel; and
an operation specifying step of causing the computer to specify at least one operation out of the plurality of operations on the basis of the contact part specified in the part specifying step.

10. A computer program for causing a computer to specify at least one operation out of a plurality of operations, the computer provided in an operation accepting device for accepting the plurality of operations on the basis of one or a plurality of contact positions detected by a touch panel,
the computer program comprising:
a part specifying step of causing the computer to specify a contact part of a hand of an operator contacted with the touch panel out of a plurality of parts of the hand on the basis of the number of contact positions detected by the touch panel; and
an operation specifying step of causing the computer to specify at least one operation out of the plurality of operations on the basis of the contact part specified in the part specifying step.

11. A computer program for causing a computer to specify at least one operation out of a plurality of operations, the computer provided in an operation accepting device for accepting the plurality of operations on the basis of light intensity detected by a light intensity detecting section provided on a rear surface of a touch panel,
the computer program comprising:
a part specifying step of causing the computer to specify a contact part of a hand of an operator contacted with the touch panel out of a plurality of parts of the hand on the basis of the light intensity detected by the light intensity detecting section; and
an operation specifying step of causing the computer to specify at least one operation out of the plurality of operations on the basis of the contact part specified in the part specifying step.
